# EUROPEAN PATENT APPLICATION

(11) **EP 2 138 946 A1**
(43) Date of publication of application: **30.12.2009**
(21) Application number: 08158870.9
(22) Date of filing: 24.06.2008
(51) Int. Cl.: G06F 21/00

(54) **Secure memory management system**

(71) Applicant: Nagravision S.A., 1033 Cheseaux-sur-Lausanne (CH)
(72) Inventor: Gremaud, Fabien, 1618, Châtel-St-Denis (CH); Gogniat, Christophe, 1030 Bussigny (CH); Bellocchio, Marc, 1081, Montpreveyres (CH); Fuchs, Pascal, 1005, Lausanne (CH)
(74) Representative: Leman Consulting S.A.

(57) **Abstract**

A method for securely loading digital information from a storage device into a memory module in a data processing system, said data processing system further comprising a memory access controller module connected between the processor and the memory module, and a secure memory management module, said method comprising the following steps:
receiving, by the secure memory management module, a request from the processor for digital information,
locating and verifying the authenticity of a segment of digital information in the storage device containing the requested digital information,
extracting access rights pertaining to said segment,
loading said segment into a chosen location of the memory module,
configuring the memory access controller module using the extracted access rights in such a way as to grant the processor the necessary rights to access the chosen location of the memory module.

## Description

### INTRODUCTION

The present invention relates to the domain of computer security, particularly in guaranteeing the secure loading of data or applications into volatile, working memory or in isolating concurrent applications from each other such that one application may not modify data or code intended for another application.

### BACKGROUND OF THE INVENTION

A data processing system may include hardware resources such as a processing unit (CPU), volatile memory (RAM) and non-volatile memory (ROM). The data processing system may operate under the control of at least one operating system and may perform routines according one or several software resources or applications. The applications may be stored in non-volatile memory and loaded into volatile memory when required to be executed. During the execution of an application, the data required by said application or the data which is produced by the application may be stored in the non-volatile or volatile memory or transferred from one memory to another.

With the advent of multiple connectivity options for data processing systems, including wireless connectivity, and with the huge growth in the use of mobile data processing systems, the need to protect these systems from malicious attacks has become increasingly important. Malicious attacks can be aimed at interfering with system booting, modifying the operating system, intercepting and/or modifying data produced by or utilized by some application.

Indeed, it has now become a necessary requirement to protect data processing systems against fraudulent manipulations and attacks on their integrity. Such malicious attacks may come in the form of software designed to take over a data processing system's operating system or otherwise interfere with the normal processing sequence of the data processing system without the user's knowledge or approval. Such software is generally known as malware. The presence of malware in a data processing system is generally difficult to remedy and can lead to complete system failure or even to irreparable damage to the system.

Computer viruses, worms, Trojan horses, spyware etc. are all different types of malware. The different types of malware can attack the processing system in various ways such as by intercepting data which was meant for another application or by monitoring key strokes in order to steal passwords or other information which is meant to be kept secret, modifying or otherwise altering data or corrupting files, modifying a program in order to cause it to crash or to execute some function which was not originally intended by the user.

Systems to combat against malware attacks exist and usually feature a memory management unit, which is configurable by the system's CPU. Security is thus compromised if the CPU suffers an attack from an ill-intentioned user. Because of the complexity exhibited by a modern CPU, the additional security functions which would be required in order to minimize the possibility of such an attack would lead to a significant cost increase in terms of the extra on-chip real estate necessary to implement such functions and would lead to computing overhead and therefore compromise the speed of operation. Again, due to the complexity of a typical CPU, such modifications could not offer a high level of security with an acceptable level of confidence. Accordingly, it would be desirable to have a cost-efficient and size-efficient solution providing secure management of the loading or unloading of data or applications into or out of memories in a data processing system.

### SUMMARY OF THE INVENTION

The present invention describes a method for securely loading digital information from a storage device into a memory module in a data processing system, said data processing system comprising at least one storage device, one memory module and at least one processor, said data processing system further comprising a memory access controller module connected between the processor and the memory module, and a secure memory management module connected to the processor, the memory module, the storage device and the memory access controller, said method comprising the following steps:
receiving, by the secure memory management module, a request from the processor for digital information,
locating a segment of digital information in the storage device containing the requested digital information,
verifying the authenticity of the digital information contained in the located segment,
extracting access rights pertaining to said segment,
loading said segment into a chosen location of the memory module,
configuring the memory access controller module using the extracted access rights in such a way as to grant the processor the necessary rights to access the chosen location of the memory module.

As well as having a memory access controller module to handle accesses to the memory module, the present invention further introduces a second dedicated hardware block, namely the secure memory management module, to handle the configuring of the memory access controller module. This is conducive to a high level of security in the system since the secure memory management module is of simple architecture with a reduced set of commands such as load and store, and therefore less prone to attack than would be a CPU in the case that said CPU were responsible for configuring the memory access controller module.

### BRIEF DESCRIPTION OF THE DRAWINGS

The invention will best be understood by reference to the following detailed description of a preferred embodiment when read in conjunction with the accompanying drawings, wherein:

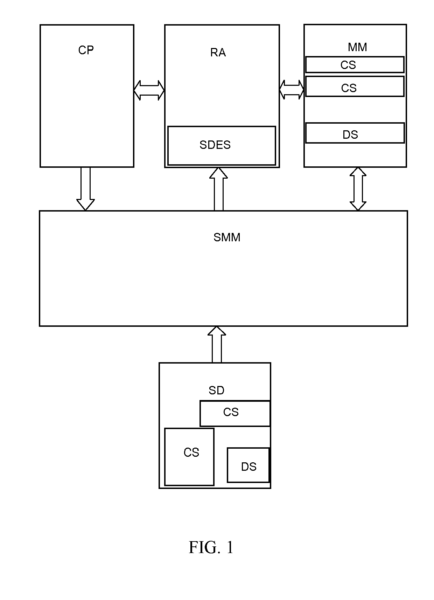

FIG.1 shows a data processing system comprising a processor (CP), a memory module (MM), a storage device (SD), a memory access controller module (RA) and a secure memory management module (SMM).

### DETAILED DESCRIPTION OF A PREFERRED EMBODIMENT

The present invention describes a method for providing, within a data processing system, a means for secure loading of digital information from a storage device into a memory module. In general the storage device is in a non-trusted environment and the memory module is in a trusted environment. The invention provides an interface between the trusted environment and the non-trusted environment, through which requests for access to the digital information must pass. The invention includes means for granting the system's processor the correct access rights to the various locations or segments of the memory module once they are loaded. The storage device can take the form of a flash memory, an EPROM, an EEPROM, a ROM, a hard disk, an external server or other such storage means. The memory module will usually take the form of a random access memory (RAM) i.e. a volatile memory. In the context of this document, the term digital information is used to describe data liable to be loaded into the memory module, such as executable code or information generated by executable code or used by executable code.

The secure memory management system of the current invention is integrated into a data processing system (FIG.1) comprising at least a processor (CP), a memory module (MM) and a storage device (SD) and includes dedicated hardware known as a secure memory management module (SMM) connected between the processor and memory module on one side, and the storage device on the other side, the purpose of said memory management module being to manage the communication between the processor and the memory module as well as to transfer digital information between the storage device and the memory module. Said secure memory management system further includes dedicated hardware known as a memory access controller module (RA) placed between the processor and the memory module. The memory access controller module acts as a firewall between the processor and the memory module and is configured by the secure memory management module to grant the processor the appropriate rights of access to the parts of the memory module which have been loaded. The secure memory management module thus functions together with the memory access controller module to ensure that the memory module remains secure.

The access rights are stored along with the digital information in the storage device. Digital information which is currently being used by the processor is held in the memory module. In the current invention, memory segmentation is used i.e. the digital information is stored in segments. A segment is made up of several blocks of a predetermined number of bytes. For example a block of digital information could be 32 bytes long. Each segment has a set of attributes associated with it, such as the type of data contained in the segment, the length of the segment, the address of the segment, a set of access rights describing which processes can have read access or write access or execute access to the segment. These attributes are recorded in a header attached to the segment. FIG.1 shows two different types of segments, namely code segments (CS) comprising executable code and data segments (DS) comprising digital information which can be used by an application or generated by an application.

When the processor requires access to digital information which does not currently reside in the memory module, the processor sends a request to the secure memory management module for the required digital information. Upon receiving the request from the processor, the secure memory management module retrieves the segment, or the plurality of segments containing the requested digital information, from the storage device and loads it into the memory module. The secure memory management module also performs an authentication of the digital information which is loaded. The authentication may be achieved in one of the standard ways. For example, at the time the digital information is generated, the owner of the digital information computes a one-way function on the digital information in each block, encrypts the result of the one-way function according to a asymmetric encryption algorithm using a private key and appends the result to the block header as a signature. During the authentication procedure the same one-way function is performed on each block and the result is compared with the signature in the block header decrypted by the public key of the owner of the digital information. If there is a match, then it proves that the digital information was generated by the owner and that it has not been modified following its generation. The authentication could be done at the segment level rather than at the block level, whereby the one-way function is performed on the entire segment and the encryption of the one-way function (i.e. the signature) is appended to a segment header. Each segment has a segment header associated with it. The segment header comprises, for example, the segment identification number, the address at which the segment is loaded, the access rights relative to that segment, the type of segment and the number of blocks in the segment. This segment header is preferably stored with the segment in the storage device.

The memory access controller (RAC) contains a segment descriptor (SDES). The segment descriptor holds part of the segment header corresponding to each segment of digital information that has been loaded into the memory module. As each segment is loaded and authenticated, the secure memory management module updates the access rights in the segment descriptor thus granting the processor the proper rights to the corresponding segment in the memory module. Until the segment descriptor is updated, the processor has no access to the part of the memory module where the digital information is being loaded. In order to allow for compatibility over several different operating systems, the segment descriptors could be of an "ELF" format (Executable and Linking Format), which is a standard file format for executables, object code, libraries etc. Examples of the access rights are "read", "write", "execute", "security level" (state of the processor).

In another embodiment of the current invention, a light encryption could be used on the digital information stored in the memory module. According to a first embodiment, the key would be based on a random number generated by the secure memory management module. This number can be generated while initializing the system so that each time the system is powered on, a new key will be generated. The digital information in a segment would be encrypted under this key and the key would be placed in the segment descriptor corresponding to that segment. The random key could alternatively be generated each time a segment is uploaded. The digital information would then be decrypted by the memory access controller at the time that the CPU requests that information. In yet another embodiment of the current invention, the encryption key could be a function of the physical address (the actual address in the memory module) in which the digital information is loaded (i.e. calculating the Hash value of the physical address).

In general, a memory access controller will perform a mapping function in that the address to which a segment of digital information is loaded (the physical address) is different from the address used to reference that segment (the virtual address). In this case, the segment header further comprises the virtual address used by the processor while requesting the segment. This allows the secure memory management module to be able to locate the requested segment in the storage device.

In a further embodiment of the current invention the mapping function could vary between successive loads of the memory module. The secure memory management module can determine a free location in the memory module and store the requested segment in that free location. The free location can be selected among the possible free locations in a random manner so that the segment is loaded in a different place even though the same segment is requested twice. The selected physical address is then mapped to the virtual address.

As well as ensuring the security of digital information loaded into the memory module, the current invention also allows for the processor to complete other tasks while the memory module is being loaded, since all functions related to the loading of the memory module are delegated to the secure memory management module.

## Claims

1. A method for securely loading digital information from a storage device into a memory module in a data processing system, said data processing system comprising at least one storage device, one memory module and at least one processor, said data processing system further comprising a memory access controller module connected between the processor and the memory module, and a secure memory management module connected to the processor, the memory module, the storage device and the memory access controller, said method comprising the following steps:
receiving, by the secure memory management module, a request from the processor for digital information,
locating a segment of digital information in the storage device containing the requested digital information,
verifying the authenticity of the digital information contained in the located segment,
extracting access rights pertaining to said segment,
loading said segment into a chosen location of the memory module,
configuring the memory access controller module using the extracted access rights in such a way as to grant the processor the necessary rights to access the chosen location of the memory module.

2. The method of claim 1 **characterised in that** the storage device is in a non-trusted environment and the memory module is in a trusted environment.

3. The method of claim 1 **characterised in that** the storage device is a flash memory, an EPROM, an EEPROM, a ROM, a hard disk, an external server or any other external storage device.

4. The method of any of claims 1 to 3 **characterised in that** a mapping scheme is used whereby a virtual address is related to a physical address, said virtual address being an address used by the processor to refer to a piece of digital information and said physical address being an address in the memory module where said digital information is stored.

5. The method of claim 4 **characterised in that** the relationship between the virtual address and the physical address is modified at least once following a load of the memory module.

6. The method of claim 5 **characterised in that** the digital information is encrypted by a key prior to loading into the memory module.

7. The method of claim 6 **characterised in that** the encryption key is based on a random number generated in the secure memory management module.

8. The method of claim 6 **characterised in that** the encryption key is based on the physical address.

9. The method of either of claims 7 or 8 **characterised in that** the memory module is a volatile memory.
